(19) Europäisches Patentamt / European Patent Office / Office européen des brevets

(11) EP 2 843 616 A1

(12) **EUROPÄISCHE PATENTANMELDUNG**

(43) Veröffentlichungstag:
**04.03.2015 Patentblatt 2015/10**

(51) Int Cl.:
***G06T 3/00*** *(2006.01)* ***G06T 5/00*** *(2006.01)*

(21) Anmeldenummer: **13198333.0**

(22) Anmeldetag: **19.12.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **29.08.2013 EP 13182134**

(71) Anmelder: **SICK AG**
**79183 Waldkirch (DE)**

(72) Erfinder:
- **Gehring, Roland**
  **79215 Elzach-Prechtal (DE)**
- **Walter, Stephan**
  **79215 Elzach-Yach (DE)**
- **Lipschinski, Dennis**
  **79348 Freiamt (DE)**

(74) Vertreter: **Hehl, Ulrich**
**SICK AG**
**Intellectual Property**
**Erwin-Sick-Strasse 1**
**79183 Waldkirch (DE)**

Bemerkungen:
Geänderte Patentansprüche gemäss Regel 137(2) EPÜ.

(54) **Optoelektronische Vorrichtung und Verfahren zur Aufnahme entzerrter Bilder**

(57) Es wird eine optoelektronische Vorrichtung (10), insbesondere ein kamerabasierter Codeleser, zur Aufnahme entzerrter Bilder mit einem Bildsensor (18), der ein Ausgangsbild aus einem Überwachungsbereich (12) aufnimmt, und mit einem digitalen Baustein (20) angegeben, insbesondere einem FPGA, der das Ausgangsbild weiterverarbeitet. Dabei sind in dem digitalen Baustein (20) Transformationsparameter zum Entzerren des Ausgangsbildes gespeichert (22), und auf dem digitalen Baustein (20) ist eine Transformationseinheit (24) implementiert, welche aus dem Ausgangsbild anhand der Transformationsparameter dynamisch ein entzerrtes Bild berechnet.

Figur 1

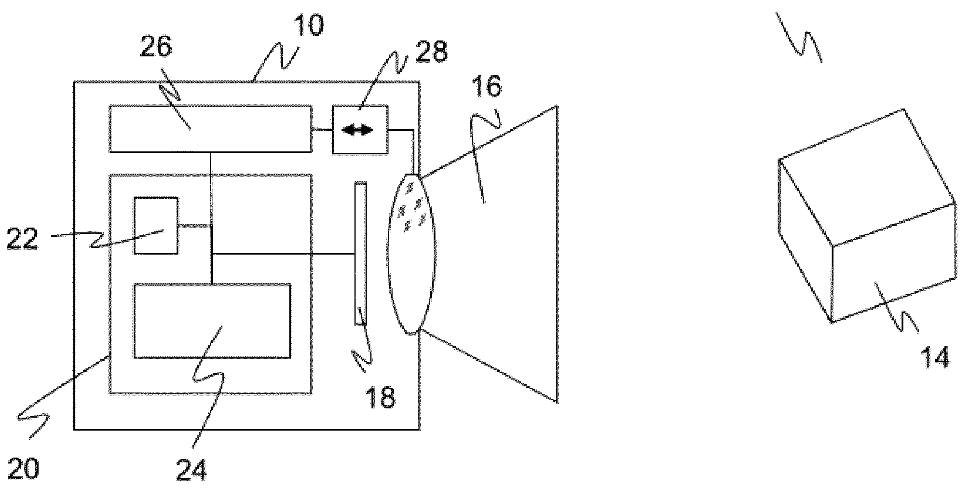


EP 2 843 616 A1

## Beschreibung

Die Erfindung betrifft eine optoelektronische Vorrichtung und ein Verfahren zur Aufnahme entzerrter Bilder nach dem Oberbegriff von Anspruch 1 beziehungsweise 15.

In industriellen Anwendungen werden Kameras in vielfältiger Weise eingesetzt, um Objekteigenschaften automatisch zu erfassen, beispielsweise zur Inspektion oder Vermessung von Objekten. Dabei werden Bilder des Objekts aufgenommen und entsprechend der Aufgabe durch Bildverarbeitungsverfahren ausgewertet. Eine weitere Anwendung von Kameras ist das Lesen von Codes. Derartige kamerabasierte Codeleser lösen die noch weit verbreiteten Barcodescanner zunehmend ab. Mit Hilfe eines Bildsensors werden Objekte mit den darauf befindlichen Codes aufgenommen, in den Bildern die Codebereiche identifiziert und dann dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen.

Eine häufige Erfassungssituation ist die Montage der Kamera über einem Förderband, wo in Abhängigkeit der gewonnenen Objekteigenschaften weitere Bearbeitungsschritte eingeleitet werden. Solche Bearbeitungsschritte bestehen beispielsweise in der an das konkrete Objekt angepassten Weiterverarbeitung an einer Maschine, die auf geförderte Objekte einwirkt, oder in einer Veränderung des Objektstroms, indem bestimmte Objekte im Rahmen einer Qualitätskontrolle aus dem Objektstrom ausgeschleust werden oder der Objektstrom in mehrere Teilobjektströme sortiert wird.

Für die Bildauswertungen ergeben sich zusätzliche Schwierigkeiten dadurch, dass die Bilder in der Regel nicht unter Idealbedingungen aufgenommen werden. Neben unzureichender Ausleuchtung der Objekte, die durch entsprechende Beleuchtungseinheiten vermieden werden kann, entstehen Bildfehler vor allem durch eine ungünstige Perspektive der Kamera zu einer aufgenommenen Objektfläche und durch Fehler der Optik.

Für unkorrigierte Bilder müssen in Algorithmen wie solche für Barcodeerkennung, Inspektion oder Texterkennung (OCR) zusätzliche Verfahren für die Verbesserung der Robustheit in Abhängigkeit von Bildfehlern oder Verzerrungen eingesetzt werden. Dabei fehlen an dieser Stelle oftmals wichtige Parameter und Informationen darüber, wie die Bildfehler entstanden sind, so dass eine Korrektur erschwert oder unmöglich gemacht wird. Außerdem führen solche algorithmenspezifischen Maßnahmen zu erheblichem Mehraufwand.

Es ist im Stand der Technik bekannt, Bildkorrekturen mit Hilfe von Software durchzuführen. Dazu werden Nachschlagtabellen (LUT, Lookup table) berechnet, welche für eine feste Kameraanordnung beziehungsweise ein festgelegtes Objektiv die perspektivische Verzerrung und die Linsenverzeichnung korrigieren.

Um die großen Datenmengen, die üblicherweise bei der Bilderfassung anfallen, schnell und nach Möglichkeit in Echtzeit bearbeiten zu können, werden in Kameraanwendungen spezialisierte digitale Bausteine wie FPGAs (Field Programmable Gate Array) eingesetzt. Es ist auch möglich, damit eine Entzerrung durchzuführen, indem auf entsprechende vorbereitete Nachschlagtabellen zurückgegriffen wird. Allerdings benötigt eine solche Nachschlagtabelle Entzerrungsinformationen für jedes Pixel und erfordert damit bei gängigen Bildauflösungen einer Kamera ganz erhebliche Speicherressourcen, die auf einem FPGA nicht verfügbar sind. Deshalb muss ein externer Speicher vorgesehen werden. Außerdem sind Nachschlagtabellen sehr unflexibel: Mögliche Änderungen der Aufnahmesituation müssen antizipiert werden, um vorab entsprechende Nachschlagtabellen zu berechnen. Der ohnehin erhebliche Speicheraufwand für nur eine Nachschlagtabelle wird dabei vervielfacht. Außerdem kann je nach Speicherarchitektur die Umschaltung zwischen zwei Nachschlagtabellen erhebliche Zeit beanspruchen.

Daher ist Aufgabe der Erfindung, die Bildentzerrung zu verbessern.

Diese Aufgabe wird durch eine optoelektronische Vorrichtung und ein Verfahren zur Aufnahme entzerrter Bilder nach Anspruch 1 beziehungsweise 15 gelöst. Dabei geht die Erfindung von dem Grundgedanken aus, die Entzerrung der aufgenommenen Bilder dynamisch und in Echtzeit oder Quasi-Echtzeit anhand von Transformationsparametern auf einem für hohen Datendurchsatz geeigneten digitalen Baustein, insbesondere einem FPGA durchzuführen. Im Gegensatz zu einer herkömmlichen Nachschlagtabelle, die für jeden Bildpunkt oder Pixel des Bildsensors eine Umrechnung enthält, genügen sehr wenige Transformationsparameter, deren Speicherbedarf vernachlässigbar ist. Dadurch kann auf einen externen Speicher für Nachschlagetabellen verzichtet werden. Ein externer Speicher würde nicht nur Kosten und Aufwand für die Anbindung an den digitalen Baustein verursachen, sondern sogar noch durch die erforderlichen externen Speicherzugriffe den Verarbeitungstakt der Transformation und damit die Echtzeitfähigkeit begrenzen.

Wenn sich die Aufnahmesituation beispielsweise durch Änderung der Kameraposition, Wechsel des Objektivs oder auch lediglich neue aufzunehmende Objekte in der Szenerie verändert, genügt es, die Transformationsparameter anzupassen. Die Bildentzerrung kann direkt an der Quelle, d.h. unmittelbar bei der Bilderfassung beziehungsweise beim Auslesen aus dem Bildsensor erfolgen. Jegliche nachgeordnete Bildverarbeitung, wie Barcodeerkennung, Inspektion,Texterkennung oder Bildkompression (z.B. JPEG), arbeitet dann mit schon entzerrten Bildern und wird dadurch ohne besondere Maßnahmen robuster und genauer.

Die Erfindung hat den Vorteil, dass eine sehr flexible, effiziente und ressourcenschonende Bildentzerrung in dem digitalen Baustein ermöglicht wird. Da die Bilder direkt am Anfang der Bearbeitungskette entzerrt werden, wird die Leistungsfähigkeit der Kamera und insbesondere die Erkennungs- oder Leserate eines Codelesers oder eines Texterkennungssystems verbessert. Die hohe mögliche Verarbeitungsgeschwindigkeit bedeutet auch, dass ein kontinuierlicher Bildstrom entzerrt werden kann.

Die Transformationsparameter umfassen bevorzugt Parameter für eine perspektivische Korrektur und/oder eine Verzeichnungskorrektur. Die perspektivische Korrektur berücksichtigt die Lage des Bildsensors gegenüber einer aufgenommenen Objektfläche unter Berücksichtigung von Kameraparametern. Verzeichnung bedeutet hier allgemein den Oberbegriff für Objektivfehler und speziell eine Linsenverzeichnung. Die beiden Korrekturen können nacheinander vorgenommen werden, beispielsweise erst eine perspektivische Korrektur und anschließend eine Verzeichnungskorrektur. Es ist auch möglich, mehrere derartige Korrekturen zu kaskadieren. Beispielsweise dient ein erster Satz Transformationsparameter dazu, vorab in einer Kamera Linsenfehler und Positionierungstoleranzen des Bildsensors zu kompensieren, und ein zweiter Satz Transformationsparameter korrigiert die Perspektive der Kamera zum Objekt während der Aufnahme.

Bevorzugt umfassen die Transformationsparameter für die perspektivische Korrektur eine Rotation, eine Translation, eine Bildweite und/oder einen Versatz des Bildsensors zur optischen Achse. Durch Rotation und Translation kann dafür gesorgt werden, dass das entzerrte Bild einer idealen, mittig ausgerichteten und senkrechten Kameraposition zum Objekt entspricht und die aufzunehmende Objektfläche somit mittig ausgerichtet und bei Bedarf in einer bestimmten Auflösung oder formatfüllend dargestellt wird. In diese perspektivische Transformation gehen auch Kameraparameter ein, insbesondere die Bildweite, die bei nicht quadratischen Pixeln in zwei senkrechen Richtungen angegeben wird, und ein Versatz zwischen optischer Achse und Ursprung der Pixelmatrix des Bildsensors.

Die Transformationsparameter für die Verzeichnungskorrektur umfassen bevorzugt zumindest die ersten und zweiten radialen Verzeichnungskoeffizienten. Durch Linsenverzeichnung kann ein Pixel radial und tangential verschoben sein. Praktisch genügt oftmals, die radiale Verzeichnung zu korrigieren, weil sie den Effekt dominiert. Die Korrektur wird durch eine Taylorentwicklung angenähert, deren Koeffizienten eine denkbare Ausführung der Verzeichnungskoeffizienten sind. Die höheren Verzeichnungskoeffizienten können dann zumindest bei hochwertigen Objektiven vernachlässigt werden.

Die Vorrichtung weist bevorzugt eine Kalibrationseinheit auf, um die Transformationsparameter anhand eines aufgenommenen Kalibrierziels zu bestimmen. Dadurch können beliebige zusätzliche Aufnahmesituationen ohne besondere Fachkenntnisse eingelernt werden. Die Kalibrationseinheit wird vorzugsweise auf einem zusätzlichen Baustein implementiert, etwa einem Mikroprozessor, weil hier relativ komplexe Berechnungen erforderlich sind, für die beispielsweise ein FPGA nicht ausgelegt ist. Da das Einlernen außerhalb des eigentlichen Aufnahmebetriebs erfolgt, kann die Kalibrationseinheit auch ein externer Rechner sein. Durch die Kalibration kennt die Vorrichtung insbesondere ihre eigene Position und Orientierung relativ zu dem Kalibrierziel beziehungsweise einer davon festgelegten Referenzposition oder Referenzebene.

Die Transformationsparameter sind bevorzugt zwischen zwei Aufnahmen des Bildsensors veränderbar. Die Flexibilität ist ein großer Vorteil der Erfindung, denn um eine Entzerrung für eine veränderte Aufnahmesituation vorzunehmen, müssen lediglich die wenigen Transformationsparameter geändert werden, was ohne Weiteres dynamisch oder "on-the-fly" möglich ist. Die Entzerrung wird damit nachgeführt, wenn sich Aufnahmebedingungen wie Fokuslage, Abstand zwischen Kamera und Objekt, Orientierung der Kamera und/oder des Objekts, interessierender Bereich (ROI, Region of Interest), Geometrie des Objekts, verwendete Linsenbereiche, Beleuchtung oder Temperatur verändern.

Die Vorrichtung weist bevorzugt ein Objektiv mit einer Fokusverstellung auf, wobei die Transformationseinheit nach einer Fokusverstellung daran angepasste Transformationsparameter verwendet. Damit wird eine dynamische Bildentzerrung auch für fokusverstellbare Systeme oder Autofokussysteme möglich.

Die Transformationsparameter sind bevorzugt innerhalb der Entzerrung desselben Ausgangsbildes veränderbar. Es werden dann unterschiedliche Bildbereiche auf unterschiedliche Weise entzerrt. Beispielsweise werden bei einer Echtzeitentzerrung während des Auslesens von Bilddaten aus dem Bildsensor die Transformationsparameter zwischen zwei Pixeln verändert. Die Dynamik erreicht hier eine noch anspruchsvollere Stufe, die durch eine Nachschlagtabelle ungeachtet des Aufwands nicht mehr umgesetzt werden könnte.

Die Transformationseinheit verwendet bevorzugt für mehrere interessierende Bereiche innerhalb des Ausgangsbildes unterschiedliche Transformationsparameter. Das ist ein Beispiel für eine dynamische Umschaltung der Transformationsparameter während der Entzerrung desselben Bildes. Beispielsweise können so Seitenflächen eines Objekts mit zueinander unterschiedlicher Lage und Orientierung desselben Ausgangsbildes in eine senkrechte Draufsicht überführt werden. Dadurch werden beispielsweise Codes oder Texte besser lesbar und können ohne Rücksicht auf die Perspektive mit dem gleichen Decodierer bearbeitet werden.

Die Transformationsparameter sind bevorzugt veränderbar, indem in dem digitalen Baustein mehrere Sätze von Transformationsparametern gespeichert sind und zwischen diesen Sätzen gewechselt wird. Das ist nicht zu verwechseln mit der herkömmlichen Vorbereitung mehrerer Nachschlagtabellen, die um viele Größenordnungen mehr Rechen- und Speicheraufwand benötigen. Hier werden lediglich die wenigen Transformationsparameter jeweils für verschiedene Aufnahmesituationen gespeichert. Das ist dann sinnvoll, wenn die Veränderung nicht in geschlossener Form angegeben werden kann. Beispielsweise ist derzeit keine geschlossene Rechenvorschrift bekannt, wie sich die Transformationsparameter bei veränderter Fokuslage verhalten, so dass diese Berechnung durch einen Einlernvorgang ersetzt wird.

Die Transformationseinheit interpoliert bevorzugt aus mehreren benachbarten Bildpunkten des Ausgangsbildes einen Bildpunkt des entzerrten Bildes. Wenn für einen Bildpunkt des entzerrten Bildes ein virtueller korrespondierender Bildpunkt im Ausgangsbild bestimmt wird, liegt dieser im Allgemeinen nicht im Pixelraster. Deshalb wird für den Grau- oder die Farbwerte des Bildpunktes im entzerrten Bild die Nachbarschaft des virtuellen korrespondierenden Bildpunkts im Ausgangsbild zugrunde gelegt, gewichtet mit dem Abstand des virtuellen korrespondierenden Bildpunktes zu den benachbarten tatsächlichen Bildpunkten des Ausgangsbildes beziehungsweise den Pixeln des Bildsensors.

Die Transformationseinheit nutzt bevorzugt zur beschleunigten Echtzeit-Entzerrung Fließkommaberechnungen in einem DSP-Kern des als FPGA ausgebildeten digitalen Bausteins. Ein FPGA ist dafür geeignet, einfache Berechnungen für große Datenmengen schnell durchzuführen. Kompliziertere Rechenschritte wie Fließkommaoperationen sind zwar auch implementierbar, aber das wird üblicherweise wegen des Aufwands vermieden. Durch Ausnutzen des DSP-Kerns (Digital Signal Processing), der in FPGAs neuerer Generation vorgesehen ist, können Fließkommaoperationen auch auf dem FPGA auf einfache Weise durchgeführt werden.

Die Transformationseinheit weist bevorzugt eine Pipeline-Struktur auf, die insbesondere im Takt des Einlesens von Bildpunkten des Ausgangsbildes aus dem Bildsensor Bildpunkte des entzerrten Bildes ausgibt. Die Pipeline umfasst beispielsweise einen Puffer für Bildpunkte des Ausgangsbildes, eine perspektivische Transformation, eine Verzeichnungskorrektur und eine Interpolation. Die Pipeline puffert zunächst so viele Bilddaten, wie zur Berechnung des ersten Bildpunktes des entzerrten Bildes erforderlich. Nach diesem Einschwingvorgang, in dem sich dieser Puffer und die weiteren Stufen der Pipeline gefüllt haben, werden die Bildpunkte des entzerrten Bildes im Einlesetakt ausgegeben. Bis auf den kleinen Zeitversatz durch den Einschwingvorgang wird damit das bereits entzerrte Bild genauso schnell geliefert wie ohne die Erfindung das verzerrte Ausgangsbild.

Die Vorrichtung weist bevorzugt mehrere Bildsensoren auf, welche jeweils ein Ausgangsbild erzeugen, aus dem die Transformationseinheit ein entzerrtes Bild berechnet, wobei eine Bildzusammenführungseinheit dafür ausgebildet ist, die entzerrten Bilder zu einem gemeinsamen Bild zusammenzufügen. Die Transformationsparameter für die Bildsensoren unterscheiden sich vorzugsweise, um deren unterschiedliche Perspektive, Kameraparameter und Verzeichnung auszugleichen. Dabei kann für jeden Bildsensor eine eigene Transformationseinheit vorgesehen sein, aber auch eine gemeinsame Transformationseinheit nacheinander die Einzelbilder mit den unterschiedlichen Sätzen von Transformationsparametern bearbeiten. Das Zusammenführen der Bilder ("Stitching") basiert dann auf entzerrten Bildern, die insbesondere auch auf eine gleiche Auflösung gebracht sind, und führt dadurch zu wesentlich verbesserten Ergebnissen. Die Vorrichtung verhält sich nach außen wie eine einzige Kamera mit vergrößertem Sichtbereich, und der Aufbau der Vorrichtung mit mehreren Bildsensoren muss von außen gar nicht mehr berücksichtigt werden. Die Bildzusammenführung kann aber auch extern erfolgen. Es ist auch vorstellbar, dass die Ausgangsbilder der einzelnen Bildsensoren unkorrigiert und mit jeweils einem Satz Transformationsparameter an eine zentrale Auswerteeinheit übergeben werden, die dann kameraspezifisch die Entzerrung und gegebenenfalls die Bildzusammenführung vornimmt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

| | |
|---|---|
| Fig. 1 | eine Blockdarstellung einer Kamera zur Aufnahme entzerrter Bilder; |
| Fig. 2 | eine Illustration der Abbildung eines Punktes einer Objektebene auf die Bildsensorebene mittels Zentralprojektion; |
| Fig. 3 | eine Illustration eines Lochkameramodells; |
| Fig. 4 | eine Illustration der Rotation und Translation von einem Weltkoordinatensystem in ein Kamerakoordinatensystem; |
| Fig. 5 | eine Illustration zur Projektion eines Punktes im Kamerakoordinatensystem auf die Bildsensorebene; |
| Fig. 6 | eine Darstellung der vier verwandten Koordinatensysteme; |
| Fig. 7 | eine Illustration der Projektion eines Punktes im Weltkoordinatensystem auf das Pixelkoordinatensystem; |
| Fig. 8 | eine beispielhafte Darstellung einer kissenförmigen Verzeichnung, einer tonnenförmigen Verzeichnung und eines korrigierten Bildes; |
| Fig. 9 | eine Illustration der Wirkung der Verzeichnung als tangentiale und radiale Verschiebung der Bildpunkte; |
| Fig. 10 | eine Illustration, wie ein Bild in zwei Schritten geometrisch und optisch entzerrt wird; |
| Fig. 11 | eine Illustration zur Erläuterung der Berechnung von Gewichtungsfaktoren für eine bilineare Interpolation; |
| Fig. 12 | ein Blockdiagramm einer beispielhaften Implementierung einer Transformationseinheit als Pipelinestruktur; |
| Fig. 13 | ein Anwendungsbeispiel mit unterschiedlichen Transformationen für unterschiedliche Seitenflächen eines |

Objekts;

Fig. 14 ein weiteres Anwendungsbeispiel, bei dem zwei nebeneinanderliegende Ansichten einer Objektfläche zunächst entzerrt und dann zusammengefügt werden; und

Fig. 15 ein weiteres Anwendungsbeispiel, in dem ein zylinderförmiges Objekt von mehreren Seiten aufgenommen wird, um aus den entzerrten Einzelaufnahmen die gesamte Mantelfläche zusammenzufügen.

Figur 1 zeigt eine Blockdarstellung einer optoelektronischen Vorrichtung beziehungsweise Kamera 10, die ein Ausgangsbild eines Überwachungsbereichs 12 mit einer durch ein Objekt 14 dargestellten Szenerie aufnimmt und entzerrt. Die Kamera 10 weist ein Objektiv 16 auf, von dem stellvertretend für alle gängigen Objektive nur eine einzige Linse dargestellt ist. Darüber wird das Empfangslicht aus dem Überwachungsbereich 12 auf einen Bildsensor 18 geführt, beispielsweise einen matrix- oder zeilenförmigen Aufnahmechip in CCD- oder CMOS-Technologie.

Ein digitaler Baustein 20, vorzugsweise ein FPGA oder ein vergleichbarer programmierbarer Logikbaustein, ist zur Auswertung der Bilddaten mit dem Bildsensor 16 verbunden. Auf dem digitalen Baustein 20 ist ein Speicher 22 für Transformationsparameter sowie eine Transformationseinheit 24 vorgesehen, um die Bilddaten zu entzerren. Der digitale Baustein 20 kann auch die weiteren Auswertungs- und Steuerungsaufgaben der Kamera 10 erfüllen. In der beispielhaften Ausführungsform gemäß Figur 1 wird der digitale Baustein 20 dazu von einem Mikroprozessor 26 unterstützt. Dessen Funktion umfasst auch die Steuerung einer Fokusverstelleinheit 28 für das Objektiv 16.

Kern der Erfindung ist die Bildentzerrung auf dem digitalen Baustein 20 mittels der Transformationseinheit 24. Die übrigen Merkmale der Kamera 10 können fachüblich variiert werden. Dementsprechend ist auch der Kameratyp nicht beschränkt, und die Erfindung bezieht sich beispielsweise auf Monochrom- und Farbkameras, Zeilen- und Matrixkameras, Thermokameras, 2,5D-Kameras nach dem Lichtschnittverfahren, 3D-Kameras nach dem Stereoverfahren oder dem Lichtlaufzeitverfahren und weitere. Die Bildkorrektur umfasst beispielsweise geometrische und optische Verzerrungen abhängig von sich ändernden Eingangsparametern wie Anordnung und Orientierung von Kamera 10 zu Objekt 14, interessierendem Bildausschnitt (ROI), Fokuslage, Objektiveinstellungen und -fehler sowie von geforderten Ergebnisparametern wie Bildauflösung oder Zielperspektive. Die Transformationseinheit 24 entzerrt das von dem Bildsensor 18 erhaltene Ausgangsbild vorzugsweise so früh wie möglich, also direkt an der Quelle quasi als ersten Schritt der Bildauswertungen, so dass sämtliche nachgelagerten Algorithmen wie Objekterkennung, Objektverfolgung, Identifikation, Inspektion, Codelesen oder Texterkennung bereits mit entzerrten Bildern arbeiten können und damit genauer werden und weniger Rechenaufwand erzeugen.

Zum Verständnis der Arbeitsweise der Transformationseinheit 24 werden nun zunächst unter Bezugnahme auf die Figuren 2 bis 9 einige mathematische Grundlagen angegeben. Diese Grundlagen werden dann wie unterstützend in den Figuren 10 und 11 illustriert für eine Ausführungsform der Bildentzerrung angewandt. Anschließend wird anhand der Figur 12 eine beispielhafte Pipelinestruktur für die Transformationseinheit 24 in einem als FPGA ausgebildeten digitalen Baustein 20 erläutert, bevor abschließend einige Anwendungsbeispiele gemäß Figuren 13 bis 15 vorgestellt werden.

Zwei besonders wichtige Bildkorrekturen der Transformationseinheit 24 sind die perspektivische Entzerrung und die Verzeichnung durch das Objektiv 16. Zunächst wird die perspektivische Entzerrung betrachtet, mittels derer eine Ebene des Objekts 14 im Überwachungsbereich Objektbereich in die Ebene des Bildsensors 18 überführt werden soll. Dazu sind allgemein eine Drehung mit drei Rotationsparametern sowie eine Verschiebung mit drei Translationsparametern erforderlich. Hinzu kommen Kameraparameter, welche die Abbildung durch das Objektiv 16 sowie Eigenschaften und Lage des Bildsensors 18 innerhalb der Kamera 10 berücksichtigen.

Um die Drehung und Translation durch eine einzige Matrixoperation darstellen zu können, wird eine Transformation im affinen Raum betrachtet, bei der die Ortskoordinaten $\boldsymbol{q} \in \mathbb{R}^n$ des euklidischen Raums durch Hinzufügen einer homogenen Koordinate um eine Dimension erweitert sind, wobei die homogene Koordinate den Wert 1 erhält:

$$\boldsymbol{q} = (q_1, \ldots, q_n, 1).$$

Die homogene Koordinate ermöglicht es nun wie gewünscht, die lineare Transformation mit einer Drehmatrix $R_{CW}$ und einem Translationsvektor $\boldsymbol{T}_{CW}$, die im euklidischen Raum die Ortsvektoren ${}^{e}\boldsymbol{X}_C$, ${}^{e}\boldsymbol{X}_W$ der Kamera (C) und der Welt (W) durch

$${}^{e}\boldsymbol{X}_C = R_{CW}\,{}^{e}\boldsymbol{X}_W + \boldsymbol{T}_{CW}$$

ineinander überführen, als eine geschlossene Matrixmultiplikation

$$\boldsymbol{X}_C = \begin{pmatrix} R_{CW} & \boldsymbol{T}_{CW} \\ 0 & 1 \end{pmatrix} \boldsymbol{X}_W = \begin{pmatrix} r_{11} & \cdots & r_{1n} & t_1 \\ \vdots & \ddots & \vdots & \vdots \\ r_{n1} & \cdots & r_{nn} & t_n \\ 0 & 0 & 0 & 1 \end{pmatrix} \begin{pmatrix} x_{w1} \\ \vdots \\ x_{wn} \\ 1 \end{pmatrix}$$

zu darzustellen, indem die Ortsvektoren ${}^e\boldsymbol{X}_C$, ${}^e\boldsymbol{X}_W$ in homogenen Koordinaten als $\boldsymbol{X}_C$, $\boldsymbol{X}_W$ ausgedrückt werden.

Die homogenen Koordinaten eigenen sich für die Beschreibung des Abbildungsprozesses der Kamera 10 als Zentralprojektion. Figur 2 illustriert dies für einen Punkt $(x_2, y_2)^T$ der Ebene $E_2$ im Objektbereich, der auf einem Punkt $(x_1, y_1)^T$ in der Ebene $E_1$ des Bildsensors 18 abgebildet wird. Hierbei ist die homogene Koordinate $x_{n+1} \neq 1$, denn sie entspricht einem Skalierungsfaktor, welcher durch

$$x_m = \frac{\breve{x}_m}{x_{n+1}} \text{ für alle } m \in \{1, \ldots, n\}$$

einen Vektor im projektiven Raum durch Normierung mit der homogenen Koordinate $x_{n+1}$ in einen korrespondierenden Vektor im affinen Unterraum überführt. Eine projektive Transformation, auch als Homographie-Transformation bezeichnet, kann als Matrixmultiplikation der homogenen Vektoren $\breve{\boldsymbol{x}}_1$, $\breve{\boldsymbol{x}}_2$ mit der Homographie-Matrix $H$ ausgedrückt werden. Durch Normierung mit der homogenen Koordinate $w_n$ wird die transformierte Ebene wieder aus dem projektiven Raum in den affinen Unterraum überführt:

$$\begin{aligned} \breve{\boldsymbol{x}}_1 &= H \, \breve{\boldsymbol{x}}_2 , \\ \begin{pmatrix} x_1 \\ y_1 \\ w_1 \end{pmatrix} &= \begin{pmatrix} h_{11} & h_{12} & h_{13} \\ h_{21} & h_{22} & h_{23} \\ h_{31} & h_{32} & h_{33} \end{pmatrix} \begin{pmatrix} x_2 \\ y_2 \\ 1 \end{pmatrix}. \end{aligned}$$

Die Abbildung der Kamera 10 soll mit einem Modell erfasst werden, das alle wesentlichen Eigenschaften der Kamera 10 mit so wenigen Parametern wie möglich beschreibt. Dazu reich meist das Lochkameramodell aus, das in Figur 3 illustriert ist. Dabei erfahren bei Projektion der Weltszene die Bildpunkte der Objektebene eine Punktspiegelung am Brennpunkt und werden dadurch spiegelverkehrt auf die Bildebene abgebildet.

Um nun die Projektion von beliebigen 3D-Weltpunkten $\boldsymbol{X}_W$ auf der Bildebene zu berechnen, wird im ersten Schritt die Rotation $R_{CW}$ und die Translation $\boldsymbol{T}_{CW}$ vom Weltkoordinatensystem $W$ in das Kamerakoordinatensystem $C$ benötigt. Das ist in Figur 4 illustriert.

Um die Beschreibung der Zentralprojektion zu vereinfachen, wird nun die Bildebene vor den Brennpunkt gesetzt und der Brennpunkt in den Koordinatenursprung $C$ der Kamera 10 gelegt, wie im linken Teil der Figur 5 dargestellt. Der Koordinatenursprung C entspricht dem bildseitigen Brennpunkt des Objektivs 16. Die Kamerahauptachse $Z_C$ schneidet die Bildebene orthogonal im optischen Bildmittelpunkt der Abbildung $P$. Die Projektion berechnet sich dann über den Strahlensatz gemäß dem rechten Teil der Figur 5, wobei der Auftreffpunkt der Projektion über den Abstand $f$ beziehungsweise die Bildweite bestimmt ist.

Für eine vervollständigte Betrachtung werden nun zusätzlich noch ein Bildkoordinatensystem B und ein Pixelkoordinatensystem P eingeführt. Alle verwendeten Koordinatensysteme werden in Figur 6 gezeigt. Das Bildkoordinatensystem ist rein virtuell und ist wegen seiner Rotationssymmetrie für die noch zu beschreibende Berechnung von Verzeichnungskoeffizienten nützlich. Das Pixelkoordinatensystem ist das Zielkoordinatensystem, in welchem die Projektion eines beliebigen Weltpunktes auf die Pixelebene beschrieben werden soll.

Die perspektivische Projektion eines Weltpunkts $\boldsymbol{X}_W$ in das Bildkoordinatensystem B berechnet sich über eine Rotation und Translation in das Kamerakoordinatensystem C durch

$$\boldsymbol{X}_C = (x_C, y_C, z_C) = R_{CW}\boldsymbol{X}_W + \boldsymbol{T}_{CW}$$

mit anschließender Projektion auf die Bildkoordinaten $x_B$, $y_B$:

$$x_B = \frac{f x_C}{z_C},\ y_B = \frac{f y_C}{z_C}.$$

In Matrixschreibweise ergibt sich

$$\breve{\boldsymbol{x}}_B = \begin{pmatrix} f x_C \\ f y_C \\ z_C \end{pmatrix} = \begin{pmatrix} f & 0 & 0 \\ 0 & f & 0 \\ 0 & 0 & 1 \end{pmatrix} \begin{pmatrix} x_C \\ y_C \\ z_C \end{pmatrix}.$$

Da es sich um eine perspektivische Projektion handelt, muss diese Gleichung noch mit ihrer homogenen Koordinate $z_C$ normiert werden. Außerdem liegt der Ursprung des Pixelkoordinatensystems üblicherweise gegenüber der optischen Achse der Kamera 10 um einen Verschiebungsvektor $(p_x, p_y{}^T)$ versetzt. Es gilt daher

$$\begin{pmatrix} x_B \\ y_B \\ 1 \end{pmatrix} = \begin{pmatrix} \frac{f x_C + p_x}{z_c} \\ \frac{f y_C + p_y}{z_c} \\ \frac{z_C}{z_C} \end{pmatrix} = \begin{pmatrix} f & 0 & p_x \\ 0 & f & p_y \\ 0 & 0 & 0 \end{pmatrix} \begin{pmatrix} x_C \\ y_C \\ z_C \end{pmatrix}.$$

Nun werden noch kameraspezifische Eigenschaften berücksichtigt. Die Pixel des Bildsensors 18 können eine unterschiedliche Größe in x- und y-Richtung haben, was Bildweite *f* und Verschiebungsvektor $(p_x, p_y{}^T)$ durch Skalierungsfaktoren $s_x, s_y$ verändert:

$$f_x \coloneqq s_x f,$$

$$f_y \coloneqq s_y f,$$

$$x_0 \coloneqq s_x p_{x,}$$

$$y_0 \coloneqq s_y p_{y.}$$

Weiterhin ist noch denkbar, dass die beiden Achsen des Bildsensors 18 nicht orthogonal zueinander stehen. Das schlägt sich in einem Skew-Parameter *s* nieder, der aber bei üblichen Kameras 10 regelmäßig verschwindet. Die fünf Kameraparameter werden in einer Matrix $K \coloneqq \begin{pmatrix} f_x & s & x_0 \\ 0 & f_y & y_0 \\ 0 & 0 & 1 \end{pmatrix}$ erfasst. Gemeinsam mit den jeweils drei Freiheitsgraden der Rotation $R_{CW}$ und der Translation $\boldsymbol{T}_{CW}$ wird die Transformation durch 11 Parameter beschrieben, und es gilt zusammenfassend, dass die Projektion $\boldsymbol{X}_P$ eines beliebigen Punktes $\boldsymbol{X}_W$ im Weltkoordinatensystem in das Pixelkoordinatensystem durch

$$X_P = K(R_{CW}X_W + T_{CW})$$

berechnet werden kann. Diese Transformation ist in Figur 7 nochmals illustriert.

Nach dieser Betrachtung der perspektivischen Entzerrung wird nun eine Verzeichnungskorrektur erläutert. Figur 8 zeigt als Beispiel im linken Teil eine kissenförmige Verzeichnung, im mittleren Teil eine tonnenförmige Verzeichnung und im rechten Teil das angestrebte korrigierte Bild. Durch Linsenverzeichnung werden gerade Linien des Objektbereichs gekrümmt auf dem Bildsensor 18 abgebildet. Die Linsenverzeichnung hängt unter anderem von der Qualität des Objektivs 16 und dessen Brennweite ab. Für einen einzelnen Bildpunkt betrachtet, bewirkt die Verzeichnung wie in Figur 9 gezeigt eine radiale und tangentiale Verschiebung. Die Verzeichnung ist radialsymmetrisch und ihr Ausmaß vom Abstand $r_d = \sqrt{x_K^2 + y_K^2}$ zum Zentrum der Verzeichnung abhängig. Statt der genauen Berechnung über die Wurzel wird üblicherweise eine Taylorreihenentwicklung vorgenommen, in der nur die ersten Terme über die als Verzeichnungskoeffizienten bezeichneten Taylorkoeffizienten berücksichtigt werden. Außerdem ist bekannt, dass die radiale Verzeichnung die tangentiale Verzeichnung dominiert, so dass eine meist ausreichende Genauigkeit erzielt wird, wenn man nur die zweite und vierte Ordnung über zwei Verzeichnungskoeffizienten $\kappa_1$, $\kappa_2$ berücksichtigt. Für die Korrekturfunktion, die einen nicht verzeichneten Bildpunkt $\mathbf{x}_{Ku} = (x_{Ku}, y_{Ku})^T$ aus der aktuellen Pixelposition $\mathbf{x}_K = (x_K, y_K)^T$ auf dem Bildsensor 18 abbildet, gilt dann

$$\boldsymbol{x}_{Ku} = \boldsymbol{x}_k\left(1 + \kappa_1 r_d^2 + \kappa_2 r_d^4\right).$$

Figur 10 illustriert, wie ein Ausgangsbild des Bildsensors 18 in zwei Schritten geometrisch und optisch entzerrt wird. In einer ersten Rückwärtstransformation wird mit der inversen Homographiematrix die noch verzeichnete Position über einen sogenannten Versatzvektor berechnet. In einer zweiten Transformation wird die nicht verzeichnete Pixelposition berechnet, was einer Modifikation des Versatzvektors entspricht.

Die dafür benötigten Transformationsparameter sind in dem Speicher 22 abgelegt. Ein Beispiel für einen Satz Transformationsparameter sind die oben genannten Freiheitsgrade der Rotation und Translation, die Kameraparamter und die Verzeichnungskoeffizienten. Es müssen nicht zwingend alle diese Transformationsparameter berücksichtigt werden, und umgekehrt können weitere Parameter hinzukommen, etwa indem die gesamte Homographie-Matrix mit ihren acht Freiheitsgraden vorgegeben wird, Parameter für einen rechteckigen Bildausschnitt ohne schwarzen Rand sorgen, oder weitere Verzeichnungskoeffizienten.

Die Kamera 10 kann einen optionalen Kalibrationsmodus aufweisen, in dem die Transformationsparameter eingelernt werden. Beispielsweise kann dabei die Geometrie der Szenerie von einem anderen Sensor empfangen werden, etwa einem entfernungsauflösenden Laserscanner. Die eigene Position kann die Kamera über eine Lagesensor bestimmen und nachführen. Es sind auch Verfahren bekannt, mit dem die Perspektive, die Kameraparameter und/oder die Verzeichnung aus zwei- oder dreidimensionalen Kalibrierzielen geschätzt werden. Ein solches Kalibrierziel, beispielsweise ein Gittermodell, kann auch von der Kamera 10 selbst projiziert werden, was eine rasche automatische Nachführung von Transformationsparametern ermöglicht.

Selten durchzuführende Berechnungen, insbesondere wenn sie komplexere Rechenschritte beinhalten wie das Schätzen von Transformationsparamtern, werden vorzugsweise nicht auf einem FPGA implementiert, weil dies zu großen Aufwand bedeutet und Ressourcen des FPGA verbraucht. Hierfür wird eher der Mikroprozessor 26 oder sogar ein externer Rechner verwendet.

Ein weiteres Beispiel für eine derartige selten benötigte Rechnung ist die Vorwärtstransformation $\overrightarrow{ROI}_t$ eines interessierenden Bildbereichs $\overrightarrow{ROI}$, der beispielsweise für den Spezialfall eines Rechteckbereichs durch die Eckpositionen festgelegt ist. Darüber werden weitere denkbare Transformationsparameter bestimmt, nämlich die Größe und Lage eines interessierenden Bildbereichs, auf den sich eine geometrische Entzerrung beziehen soll:

$$\overrightarrow{ROI} = (y_1, y_2, x_1, x_2)^T$$

$$\overrightarrow{ROI_t} = H \begin{pmatrix} x_1 & x_2 & x_2 & x_1 \\ y_1 & y_1 & y_2 & y_2 \\ 1 & 1 & 1 & 1 \end{pmatrix}^T .$$

Nach Normalisieren der homogenen Koordinate von $\overrightarrow{ROI_t}$ wird die Größe des Ergebnisbildes und der Offset-Vektor berechnet:

$$N_{\text{Spalten}} = \max\left(\overrightarrow{ROI}_{t_x}\right) - \min\left(\overrightarrow{ROI}_{t_x}\right) + 1,$$

$$N_{\text{Zeilen}} = \max\left(\overrightarrow{ROI}_{t_y}\right) - \min\left(\overrightarrow{ROI}_{t_y}\right) + 1,$$

$$\text{Offset}_x = \min\left(\overrightarrow{ROI}_{t_x}\right) - 1,$$

$$\text{Offset}_y = \min\left(\overrightarrow{ROI}_{t_y}\right) - 1.$$

Sind alle Transformationsparameter bekannt, so werden nun die Pixel, eventuell begrenzt auf eine ROI der Bildgröße $N_{\text{Spalten}} \times N_{\text{Zeilen}}$, den Transformationen unterzogen. Die folgenden Rechenschritte müssen demnach sehr oft für die Vielzahl an Pixeln ausgeführt werden, wofür sich der digitale Baustein 20 und besonders ein FPGA eignet.

Vor der projektiven (Rück-)Transformation werden die Pixel (i,j) um den Offset-Vektor der ROI korrigiert:

$$\begin{pmatrix} x_1 \\ x_2 \end{pmatrix} \begin{matrix} = \\ = \end{matrix} \begin{pmatrix} i + \text{Offset}_x \\ j + \text{Offset}_y \end{pmatrix}.$$

Anschließend erfolgt die projektive Transformation mit der inversen Homographie-Matrix $H^{-1}$ durch

$$\boldsymbol{x} = \begin{pmatrix} x' \\ y' \\ z' \end{pmatrix} = H^{-1} \begin{pmatrix} x_1 \\ x_2 \\ 1 \end{pmatrix},$$

woraufhin die Koordinaten noch mit ihrer homogenen Koordinate z' normalisiert werden:

$$x = \frac{x'}{z'} ,$$

$$y = \frac{y'}{z'} .$$

Um die Linsenverzeichnung zu korrigieren, werden die berechneten Pixelpositionen in Quasi-Kamerakoordinaten umgerechnet:

$$X_C = \frac{(x - x_0{'})}{f_x{'}},$$

$$y_C = \frac{y - y_0{'}}{f_y{'}},$$

wobei hier beispielhaft als Schätzung der Kameramatrix *K* eine optimale Kameramatrix $K' = \begin{pmatrix} f_x{'} & 0 & x_0{'} \\ 0 & f_y{'} & y_0{'} \\ 0 & 0 & 1 \end{pmatrix}$ gemäß OpenCV [vgl. G. Bradskys OpenCV Library] genutzt wurde.

Über den von der optischen Bildmitte ausgehenden Verzeichnungsvektor $r_d$ wird dann wie oben erläutert gemäß $\boldsymbol{x}_{Ku} = \boldsymbol{x}_k\left(1 + \kappa_1 r_d^2 + \kappa_2 r_d^4\right)$ die Verzeichnung korrigiert, und anschließend werden die Pixelpositionen mit der Kameramatrix *K* wieder in das Pixelkoordinatensystem transformiert.

Damit ist nun die Ursprungsposition des unverzeichneten Pixels im Ergebnisbild berechnet. Da in der Regel das berechnete unverzeichnete Ergebnispixel zwischen vier benachbarten Pixeln liegt, wie in Figur 11 im linken Teil illustriert, wird der Wert des Ergebnispixels per bilinearer Interpolation bestimmt. Die normierte Distanz zu jedem Pixel entspricht dabei dem Gewicht, mit dem jedes der vier Ausgangspixel zu dem Ergebnispixel beitragen soll.

Die Gewichtungsfaktoren *K*1...*K*4 für die vier Ausgangspixel berechnen sich mit den Bezeichnungen gemäß Figur 11 zu

$$K1 = (1 - \Delta x)(1 - \Delta y),$$

$$K2 = \Delta x(1 - \Delta y),$$

$$K3 = (1 - \Delta x)\Delta y,$$

$$K4 = \Delta x \Delta y.$$

Dabei sind $\Delta x$,$\Delta y$ wie im rechten Teil der Figur 11 dargestellt quantisiert, wobei dort beispielhaft die Subpixelauflösung 2 Bit beträgt, womit ein normierter Schritt 0,25 Pixeln entspricht.

Figur 12 zeigt ein Blockdiagramm einer beispielhaften Implementierung der Transformationseinheit 24 als Pipelinestruktur auf einem als FPGA ausgebildeten digitalen Baustein 20. Damit können die Bilddaten "on-the-Fly" direkt nach Auslesen aus dem Bildsensor 18 in Echtzeit entzerrt werden, indem die Transformationen, insbesondere Versatzvektoren und Interpolationsgewichte, dynamisch berechnet werden. Gespeichert sind dafür lediglich die Transformationsparameter, die keinen nennenswerten Speicherbedarf haben, nicht wie herkömmlich komplette Nachschlagtabellen mit für eine fixe Situation vorausberechneten Versatzvektoren und Interpolationsgewichten für jedes einzelne Pixel des Bildsensors 18. Deshalb kann auch auf einen externen Speicher verzichtet werden. Der Rechenaufwand wird durch die erfindungsgemäße Umsetzung auf dem digitalen Baustein 20 in Echtzeit beherrscht. Es ermöglicht eine große Flexibilität, dass lediglich die Transformationsparameter geändert werden müssen, um sich an eine neue Situation anzupassen. Das kann zwischen zwei Aufnahmen, aber sogar auch ein- oder mehrfach innerhalb der Entzerrung desselben Ausgangsbildes geschehen.

Die Transformationseinheit 24 weist einen Pipeline-Manager 30 auf, der die Eingangspixel von dem Bildsensor 18 empfängt, beispielsweise direkt nach der seriellen Wandlung paralleler LVDS-Signale. Der Pipeline-Manager 30 übergibt die Eingangspixel an einen Speichermanager 32, wo eine durch die Transformation vorgegebene Anzahl an Bildzeilen über ein Multiplexelement 34 in vier Block-Ram-Speichern 36, nämlich BRAM ODD/ODD 36a, BRAM ODD/EVEN 36b, BRAM EVEN/ODD 36c und BRAM EVEN/EVEN 34d, nach geraden und ungeraden Spalten und Zeilen aufgeteilt gepuffert werden. Diese Art der Pufferung ermöglicht, dass pro Takt ein Eingangspixel geschrieben wird und gleichzeitig vier Pixel aus den Block-RAM-Speichern 36 gelesen werden können. Dadurch wird die Transformationseinheit 24 in die Lage versetzt, Pixel im gleichen Takt zu verarbeiten und auszugeben, in dem sie eingangsseitig geliefert werden.

Ein Transformationsparameter-Manager 38, welcher den Speicher 22 umfasst, hält einen oder mehrere Sätze von Transformationsparametern TP#1 ...TP#n, von denen jeweils ein Satz für die Entzerrung verwendet wird. Allerdings können die Transformationsparameter ebenso auch zwischen zwei Bildern oder sogar innerhalb eines Bildes variierend angewandt werden. Alternativ zu festen Sätzen von Transformationsparametern wäre auch eine dynamische Veränderung der Transformationsparameter denkbar, etwa durch die Angabe funktionaler Zusammenhänge oder zeitlicher Abläufe.

Sind ausreichend viele Eingangspixel zwischengespeichert, so triggert der Pipeline-Manager 30 die weiteren Blöcke, dass mit der Transformation des Bildes begonnen werden kann. Es werden dazu in einem Ausgangspixel-Generator 40 die aktuell zu bearbeitenden Koordinaten (i,j) des entzerrten Bildes erzeugt. Wie oben ausführlich erläutert, wird auf diese Koordinaten (i,j) zunächst eine projektive Transformation 42 und anschließend eine Verzeichnungskorrektur 44 angewandt, um die (i,j) entsprechenden Koordinaten im Ausgangsbild zu berechnen.

Der Speichermanager 32 erhält dementsprechend pro Takt eine perspektivisch rücktransformierte und um Verzeichnungsfehler bereinigte Pixelposition im Ausgangsbild. Ein Interpolationsmanager 46 referenziert damit immer gleichzeitig auf die vier Nachbarpixel der erhaltenen Pixelposition, die in den Block-Ram-Speichern 36 gepuffert sind. Außerdem werden die Gewichtungsfaktoren $K1... K4$ berechnet. Die nachgeordnete bilineare Interpolationseinheit muss lediglich noch die empfangenen vier Nachbarpixel richtig umordnen, damit die Gewichtungsfaktoren korrekt darauf angewandt werden. Dann wird das Ausgangspixel des entzerrten Bildes an Position (i,j) ausgegeben. Zusätzlich können noch Steueranweisungen, wie neues Bild, neue Zeile oder dergleichen an nachgelagerte Bearbeitungsblöcke weitergegeben werden.

Die beschriebene Struktur kann noch um zusätzliche dynamische Korrekturen erweitert werden. Beispielsweise ist möglich, auf Basis der berechneten 2D-Abbildung einer Weltszene in Kombination mit einem vereinfachten Beleuchtungsmodell eine Helligkeitskorrektur vorzunehmen (Flat Field Correction). Andere Erweiterungen sind zeilenbasierte Korrekturwerte, Antishading oder Fixed Pattern Noise. Solche Informationen können direkt pixelweise parallel zur geometrischen Transformation in der Pipeline berechnet werden. Die unterschiedlichen Korrekturen werden dann am Ende der Pipeline fusioniert.

Eine besonders bevorzugte Anwendung der Umschaltung von Transformationsparametersätzen ist die Anpassung an eine veränderte Fokuslage. Für die optischen Verzeichnungskoeffizienten gilt, dass sie unabhängig von der betrachteten Szenerie, jedoch abhängig von den Kameraparametern sind. Die Kameraparameter selbst sind auch unabhängig von der Szenerie, nicht aber von der Fokuslage. Deshalb müssen für Kameras 10 mit variablem Fokus Verzeichnungsparameter für die verschiedenen Fokuslagen eingelernt und in verschiedenen Sätzen von Transformationsparametern abgelegt werden. Dieser Schritt kann entfallen, sollte es zukünftig gelingen, in einem Kameramodell die Abhängigkeit der Verzeichnungsparameter von der Fokuslage in geschlossener Form anzugeben. Jedenfalls kann erfindungsgemäß eine Entzerrung problemlos für diverse Fokuslagen erfolgen, denn es müssen lediglich die Transformationsparameter und nicht wie herkömmlich ganze Nachschlagtabellen vorausberechnet und gespeichert werden, was praktisch kaum möglich und jedenfalls sehr aufwändig ist. Für die erfindungsgemäße Transformationseinheit 24 dagegen spielt es praktisch keine Rolle, welche Transformationsparameter für das gerade bearbeitete Pixel gelten, es muss lediglich der Transformationsparameter-Manager 38 auf die jeweils passenden Transformationsparameter zugreifen.

Anstatt Transformationsparameter für unterschiedliche Bildbereiche umzuschalten, kann man auch daran denken, eine Bildsequenz mehrfach und insbesondere parallel mit unterschiedlichen Transformationsparametern zu entzerren. Dadurch werden Ansichten in verschiedenen Perspektiven möglich, und sogar Stereoverfahren mit einem Kamerasystem sind vorstellbar.

Abschließend werden noch einige Anwendungsbeispiele vorgestellt. Figur 13 zeigt die Aufnahme eines Pakets, auf dessen Seitenflächen Codes angebracht sind. Diese Aufgabe stellt sich in zahlreichen Anwendungen, da quaderförmige Objekte häufig vorkommen, ohne dass vorab festliegt, an welcher Fläche sich Codes befinden können. Mit Hilfe der Erfindung ist es möglich, die unterschiedlichen Seitenflächen als einzelne ROIs zu definieren und mit unterschiedlichen Sätzen von Transformationsparametern zu entzerren. Die notwendigen Transformationsparameter werden beispielsweise aus einer eingelernten Position der Kamera 10 und vorgegebenen, eingelernten oder mittels eines Geometrieerfassungssensors bestimmten Informationen über die Paketgeometrie gewonnen. Das entzerrte Ergebnisbild zeigt die beiden Seitenflächen in einer senkrechten Perspektive, die wegen ihrer durch die Transformation zugleich erreichten gleichen Bildauflösung direkt aneinandergehängt werden können. Es ist ohne weiteres ersichtlich, dass nachgelagerte Bildauswertungen wie das Decodieren oder eine Texterkennung mit dem entzerrten Bild wesentlich einfacher zu besseren Ergebnissen kommen als mit dem Ausgangsbild.

Figur 14 zeigt ein weiteres Beispiel, in dem mehrere Kameras nebeneinander montiert sind und teils überlappend, teils einander ergänzend eine Fläche eines Pakets aufnehmen. Die erfindungsgemäße Entzerrung sorgt dafür, dass jede der Kameras ein entzerrtes Bild gleicher Auflösung liefert, insbesondere auch um möglicherweise unterschiedliche Verzeichnungen bereinigt. Die entzerrten Einzelbilder können anschließend zu einem Gesamtbild der Paketoberfläche zusammengefügt werden ("Stitching"). Nach dem gleichen Prinzip kann auch eine größere Anzahl von Kameraköpfen verbunden werden, um ein noch breiteres Lesefeld zu erzeugen. Ein solcher modularer Aufbau ist wesentlich kostengünstiger als eine Einzelkamera mit aufwändiger Optik, wobei ein Objektiv mit praktisch unbegrenzt breitem Lesefeld auch unabhängig von Kostenfragen nicht erreichbar wäre.

Es ist auch möglich, die in Figur 13 und 14 dargestellten Gedanken zu kombinieren, also mehrere Kameras einzusetzen und für mindestens eine der Kameras mehrere ROIs auszuwerten.

Figur 15 zeigt eine Variation einer Mehrfachanordnung von Kameras, die hier nicht nebeneinander liegen, sondern die um ein beispielhaft zylinderförmiges Objekt herum angeordnet werden. Mittels geeigneter Transformationsparameter kann die jeweilige Teilansicht des Zylindermantels entzerrt und anschließend ein Gesamtbild zusammengefügt werden.

## Patentansprüche

**1.** Optoelektronische Vorrichtung (10), insbesondere kamerabasierter Codeleser, zur Aufnahme entzerrter Bilder mit einem Bildsensor (18), der ein Ausgangsbild aus einem Überwachungsbereich (12) aufnimmt, und mit einem digitalen Baustein (20), insbesondere einem FPGA, der das Ausgangsbild weiterverarbeitet, **dadurch gekennzeichnet, dass** in dem digitalen Baustein (20) Transformationsparameter zum Entzerren des Ausgangsbildes gespeichert (22) sind und dass auf dem digitalen Baustein (20) eine Transformationseinheit (24) implementiert ist, welche aus dem Ausgangsbild anhand der Transformationsparameter dynamisch ein entzerrtes Bild berechnet.

**2.** Optoelektronische Vorrichtung (10) nach Anspruch 1,
wobei die Transformationsparameter Parameter für eine perspektivische Korrektur und/oder eine Verzeichnungskorrektur umfassen.

**3.** Optoelektronische Vorrichtung (10) nach Anspruch 2,
wobei Transformationsparameter für die perspektivische Korrektur eine Rotation, eine Translation, eine Bildweite und/oder einen Versatz des Bildsensors (18) zur optischen Achse umfassen.

**4.** Optoelektronische Vorrichtung (10) nach Anspruch 2 oder 3,
wobei die Transformationsparameter für die Verzeichnungskorrektur zumindest die ersten und zweiten radialen Verzeichnungskoeffizienten umfassen.

**5.** Optoelektronische Vorrichtung (10) nach einem der vorhergehenden Ansprüche,
die eine Kalibrationseinheit (26) aufweist, um die Transformationsparameter anhand eines aufgenommenen Kalibrierziels zu bestimmen.

**6.** Optoelektronische Vorrichtung (10) nach einem der vorhergehenden Ansprüche,
wobei die Transformationsparameter zwischen zwei Aufnahmen des Bildsensors (18) veränderbar sind.

**7.** Optoelektronische Vorrichtung (10) nach einem der vorhergehenden Ansprüche,
die ein Objektiv (16) mit einer Fokusverstellung (28) aufweist, und wobei die Transformationseinheit (24) nach einer Fokusverstellung daran angepasste Transformationsparameter verwendet.

**8.** Optoelektronische Vorrichtung (10) nach einem der vorhergehenden Ansprüche,
wobei die Transformationsparameter innerhalb der Entzerrung desselben Ausgangsbildes veränderbar sind.

**9.** Optoelektronische Vorrichtung (10) nach einem der vorhergehenden Ansprüche,
wobei die Transformationseinheit (24) für mehrere interessierende Bereiche innerhalb des Ausgangsbildes unterschiedliche Transformationsparameter verwendet.

**10.** Optoelektronische Vorrichtung (10) nach einem der vorhergehenden Ansprüche,
wobei die Transformationsparameter veränderbar sind, indem in dem digitalen Baustein (20) mehrere Sätze von Transformationsparametern gespeichert sind und zwischen diesen Sätzen gewechselt wird.

11. Optoelektronische Vorrichtung (10) nach einem der vorhergehenden Ansprüche, wobei die Transformationseinheit (24) aus mehreren benachbarten Bildpunkten des Ausgangsbildes einen Bildpunkt des entzerrten Bildes interpoliert.

12. Optoelektronische Vorrichtung (10) nach einem der vorhergehenden Ansprüche, wobei die Transformationseinheit (24) zur beschleunigten Echtzeit-Entzerrung Fließkommaberechnungen in einem DSP-Kern des als FPGA ausgebildeten digitalen Bausteins (20) nutzt.

13. Optoelektronische Vorrichtung (10) nach einem der vorhergehenden Ansprüche, wobei die Transformationseinheit (24) eine Pipeline-Struktur (30, 32, 38, 48) aufweist, die insbesondere im Takt des Einlesens von Bildpunkten des Ausgangsbildes aus dem Bildsensor (18) Bildpunkte des entzerrten Bildes ausgibt.

14. Optoelektronische Vorrichtung (10) nach einem der vorhergehenden Ansprüche, die mehrere Bildsensoren (18) aufweist, welche jeweils ein Ausgangsbild erzeugen, aus dem die Transformationseinheit (24) ein entzerrtes Bild berechnet, wobei eine Bildzusammenführungseinheit dafür ausgebildet ist, die entzerrten Bilder zu einem gemeinsamen Bild zusammenzufügen.

15. Verfahren zur Aufnahme entzerrter Bilder, bei dem ein Ausgangsbild aus einem Überwachungsbereich (12) aufgenommen und mit einem digitalen Baustein (20), insbesondere einem FPGA, weiterverarbeitet wird,
**dadurch gekennzeichnet,**
**dass** eine auf dem digitalen Baustein (20) implementierte Transformationseinheit (24) aufgrund von gespeicherten Transformationsparametern dynamisch eine Entzerrung berechnet, um das Ausgangsbild in ein entzerrtes Bild umzuwandeln.

**Geänderte Patentansprüche gemäss Regel 137(2) EPÜ.**

1. Optoelektronische Vorrichtung (10), insbesondere kamerabasierter Codeleser, zur Aufnahme entzerrter Bilder mit einem Bildsensor (18), der ein Ausgangsbild aus einem Überwachungsbereich (12) aufnimmt, und mit einem digitalen Baustein (20), insbesondere einem FPGA, der das Ausgangsbild weiterverarbeitet, indem auf dem digitalen Baustein (20) eine Transformationseinheit (24) implementiert ist, welche aus dem Ausgangsbild ein entzerrtes Bild berechnet,
**dadurch gekennzeichnet,**
**dass** in dem digitalen Baustein (20) Transformationsparameter zum Entzerren des Ausgangsbildes gespeichert (22) sind und dass die Transformationseinheit (24) eine Pipeline-Struktur (30, 32, 38, 48) aufweist, die im Takt des Einlesens von Bildpunkten des Ausgangsbildes aus dem Bildsensor (18) Bildpunkte des entzerrten Bildes ausgibt und dabei die für die Entzerrung erforderliche Transformation für den jeweiligen Bildpunkt anhand der Transformationsparameter in Echtzeit dynamisch berechnet.

2. Optoelektronische Vorrichtung (10) nach Anspruch 1, wobei die Transformationsparameter Parameter für eine perspektivische Korrektur und/oder eine Verzeichnungskorrektur umfassen.

3. Optoelektronische Vorrichtung (10) nach Anspruch 2, wobei Transformationsparameter für die perspektivische Korrektur eine Rotation, eine Translation, eine Bildweite und/oder einen Versatz des Bildsensors (18) zur optischen Achse umfassen.

4. Optoelektronische Vorrichtung (10) nach Anspruch 2 oder 3, wobei die Transformationsparameter für die Verzeichnungskorrektur zumindest die ersten und zweiten radialen Verzeichnungskoeffizienten umfassen.

5. Optoelektronische Vorrichtung (10) nach einem der vorhergehenden Ansprüche, die eine Kalibrationseinheit (26) aufweist, um die Transformationsparameter anhand eines aufgenommenen Kalibrierziels zu bestimmen.

6. Optoelektronische Vorrichtung (10) nach einem der vorhergehenden Ansprüche, wobei die Transformationsparameter zwischen zwei Aufnahmen des Bildsensors (18) veränderbar sind.

7. Optoelektronische Vorrichtung (10) nach einem der vorhergehenden Ansprüche, die ein Objektiv (16) mit einer Fokusverstellung (28) aufweist, und wobei die Transformationseinheit (24) nach einer Fokusverstellung daran angepasste Transformationsparameter verwendet.

8. Optoelektronische Vorrichtung (10) nach einem der vorhergehenden Ansprüche, wobei die Transformationsparameter innerhalb der Entzerrung desselben Ausgangsbildes veränderbar sind.

9. Optoelektronische Vorrichtung (10) nach einem der vorhergehenden Ansprüche, wobei die Transformationseinheit (24) für mehrere interessierende Bereiche innerhalb des Ausgangsbildes unterschiedliche Transformationsparameter verwendet.

10. Optoelektronische Vorrichtung (10) nach einem der vorhergehenden Ansprüche, wobei die Transformationsparameter veränderbar sind, indem in dem digitalen Baustein (20) mehrere Sätze von Transformationsparametern gespeichert sind und zwischen diesen Sätzen gewechselt wird.

11. Optoelektronische Vorrichtung (10) nach einem der vorhergehenden Ansprüche, wobei die Transformationseinheit (24) aus mehreren benachbarten Bildpunkten des Ausgangsbildes einen Bildpunkt des entzerrten Bildes interpoliert.

12. Optoelektronische Vorrichtung (10) nach einem der vorhergehenden Ansprüche, wobei die Transformationseinheit (24) zur beschleunigten Echtzeit-Entzerrung Fließkommaberechnungen in einem DSP-Kern des als FPGA ausgebildeten digitalen Bausteins (20) nutzt.

13. Optoelektronische Vorrichtung (10) nach einem der vorhergehenden Ansprüche, die mehrere Bildsensoren (18) aufweist, welche jeweils ein Ausgangsbild erzeugen, aus dem die Transformationseinheit (24) ein entzerrtes Bild berechnet, wobei eine Bildzusammenführungseinheit dafür ausgebildet ist, die entzerrten Bilder zu einem gemeinsamen Bild zusammenzufügen.

14. Verfahren zur Aufnahme entzerrter Bilder, bei dem ein Ausgangsbild aus einem Überwachungsbereich (12) aufgenommen und mit einem digitalen Baustein (20), insbesondere einem FPGA, weiterverarbeitet wird, wobei eine auf dem digitalen Baustein (20) implementierte Transformationseinheit (24) das Ausgangsbild entzerrt, **dadurch gekennzeichnet,**
**dass** die Entzerrung in einer Pipeline-Struktur (30, 32, 38, 48) erfolgt, die im Takt des Einlesens von Bildpunkten des Ausgangsbildes Bildpunkte des entzerrten Bildes ausgibt und dabei die für die Entzerrung erforderliche Transformation für den jeweiligen Bildpunkt anhand von gespeicherten Transformationsparametern in Echtzeit dynamisch berechnet.

Figur 1

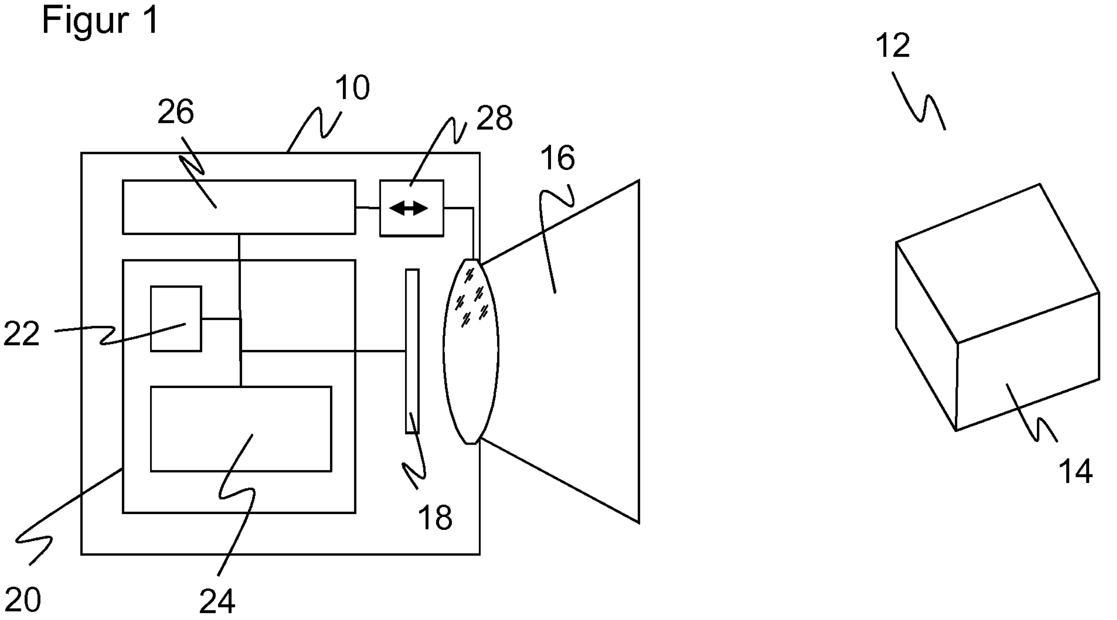


Figur 2

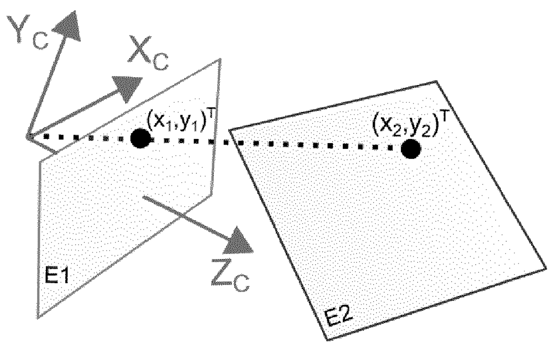


Figur 3

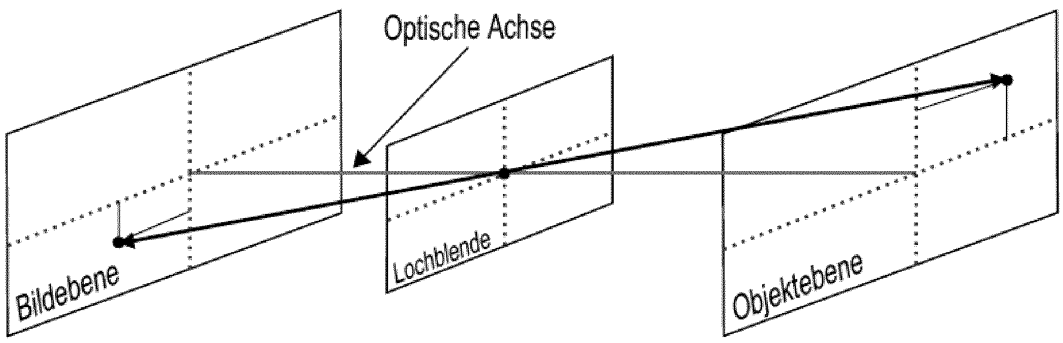

Figur 4

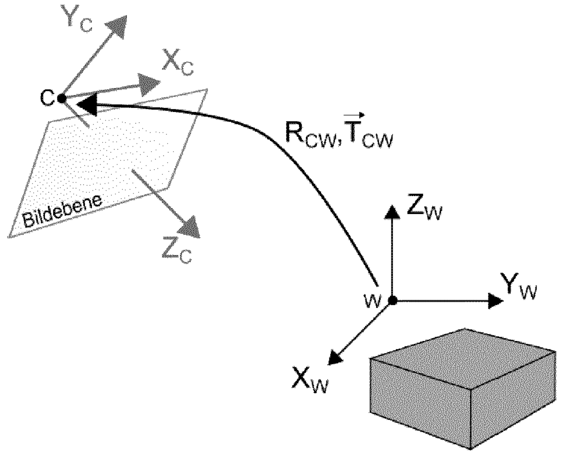


Figur 5

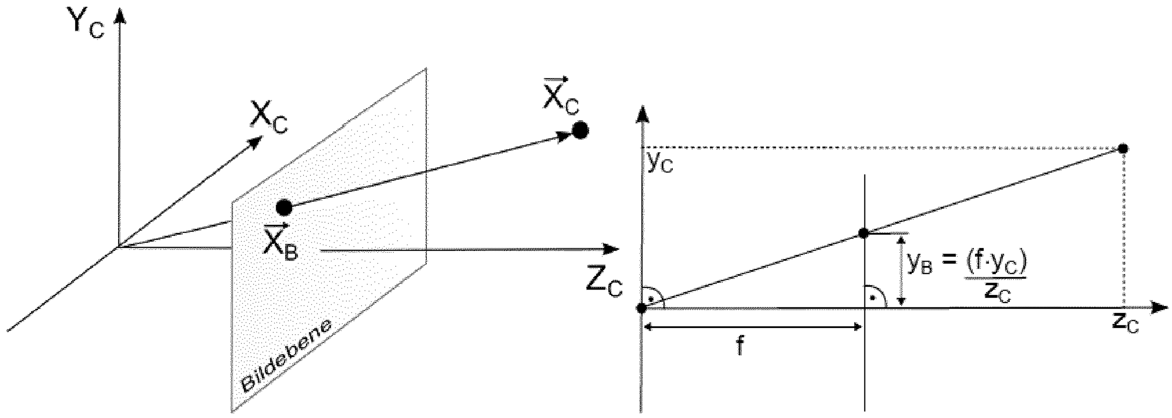


Figur 6

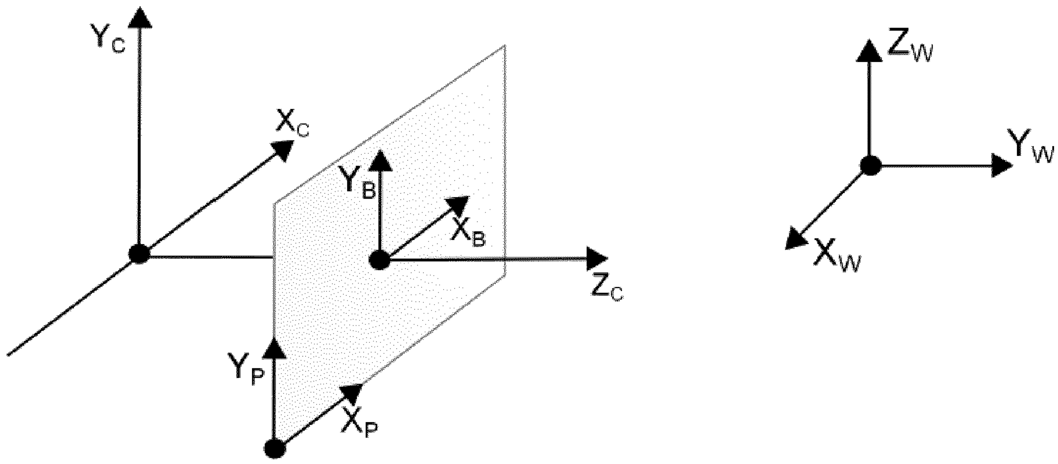

Figur 7

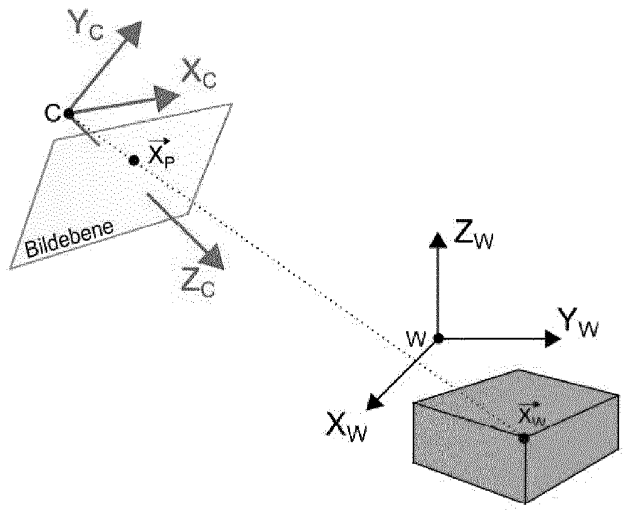


Figur 8

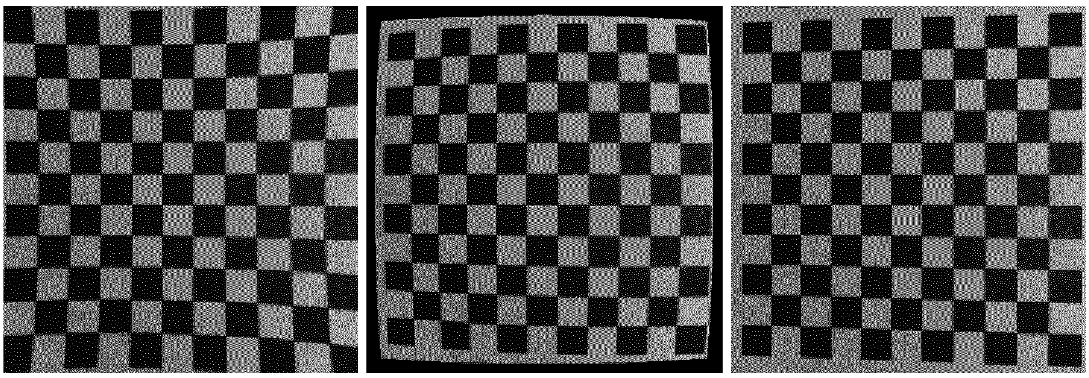

Figur 9

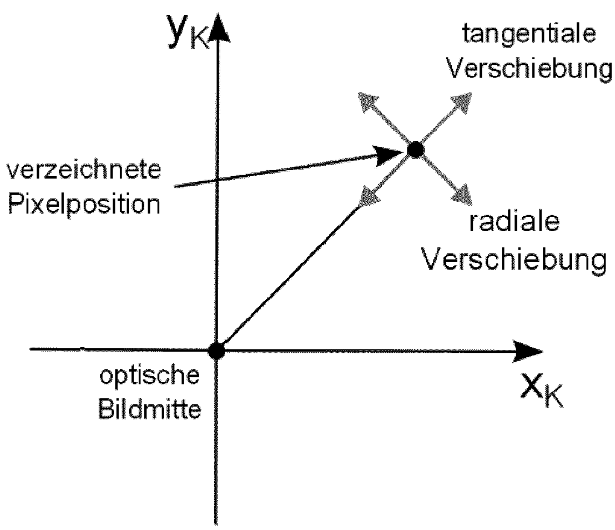

Figur 10

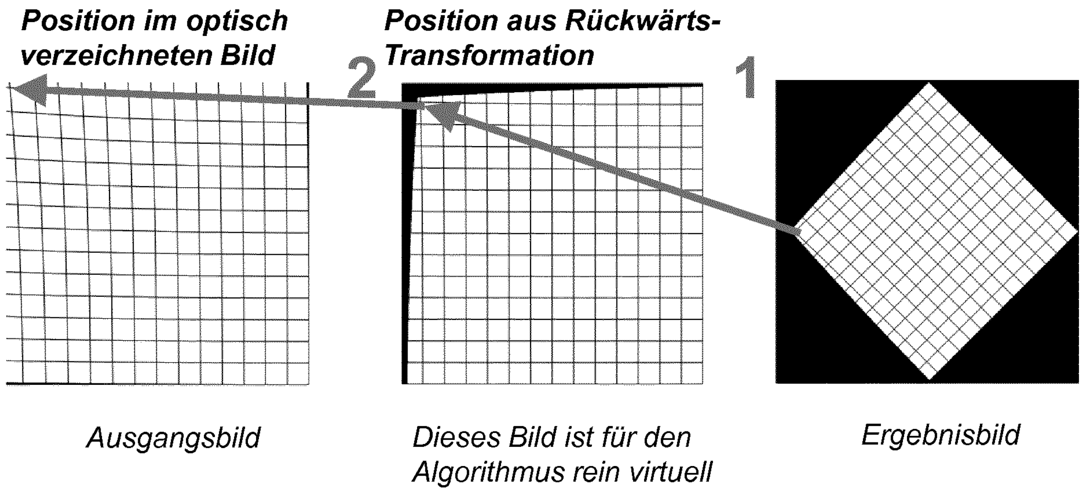


Figur 11

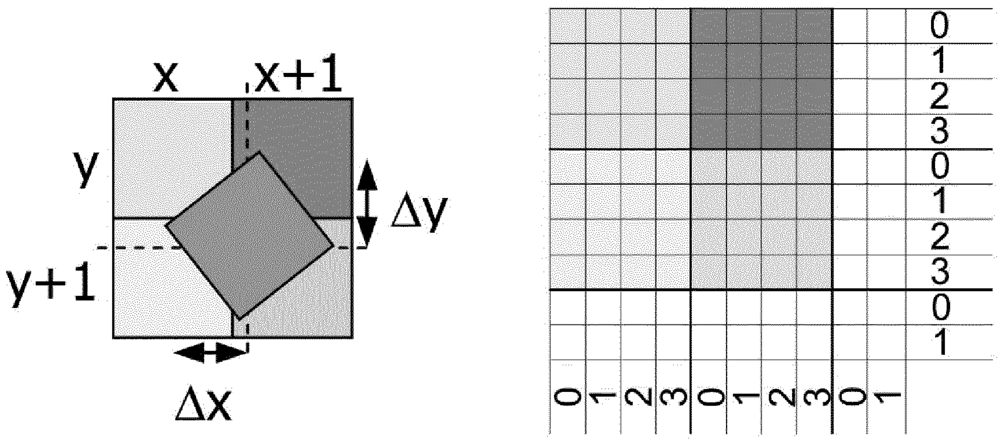

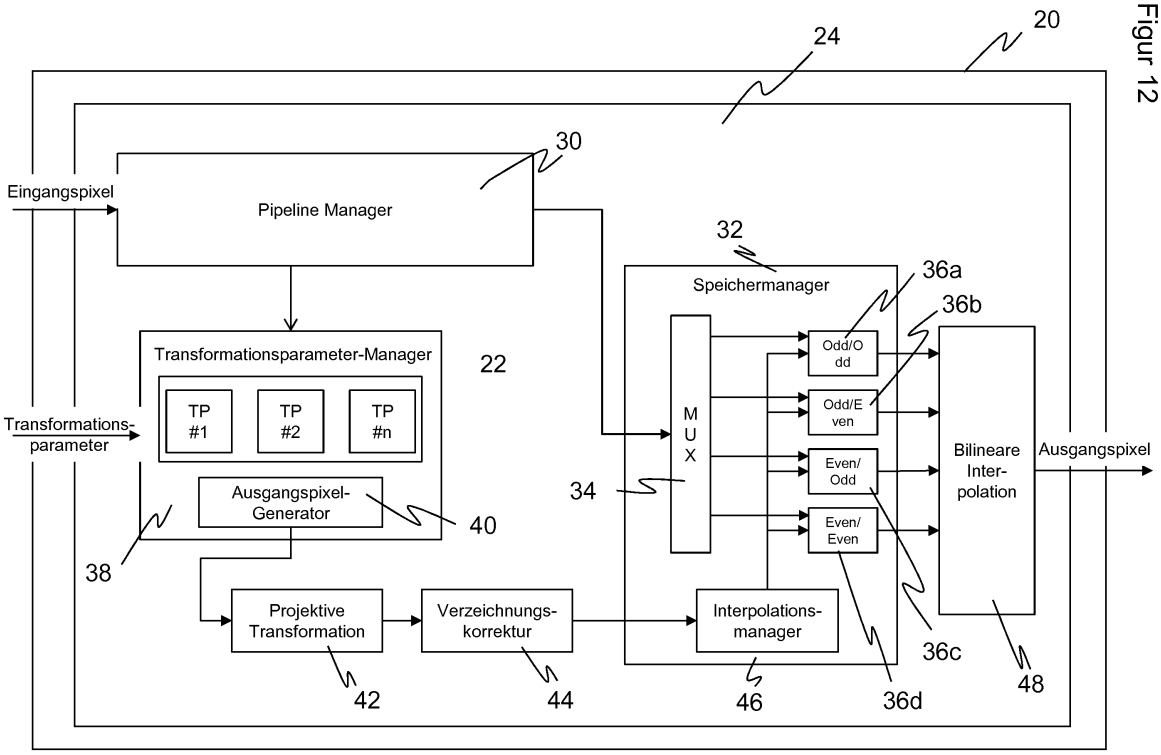
20
24
30
Eingangspixel
Pipeline Manager
32
Speichermanager
36a
36b
Transformationsparameter-Manager
22
TP #1
TP #2
TP #n
Transformations-parameter
Odd/O dd
Odd/E ven
Even/ Odd
Even/ Even
M U X
Bilineare Inter-polation
Ausgangspixel
34
Ausgangspixel-Generator
40
38
Projektive Transformation
Verzeichnungs-korrektur
Interpolations-manager
36c
48
42
44
46
36d

Figur 12

Figur 13

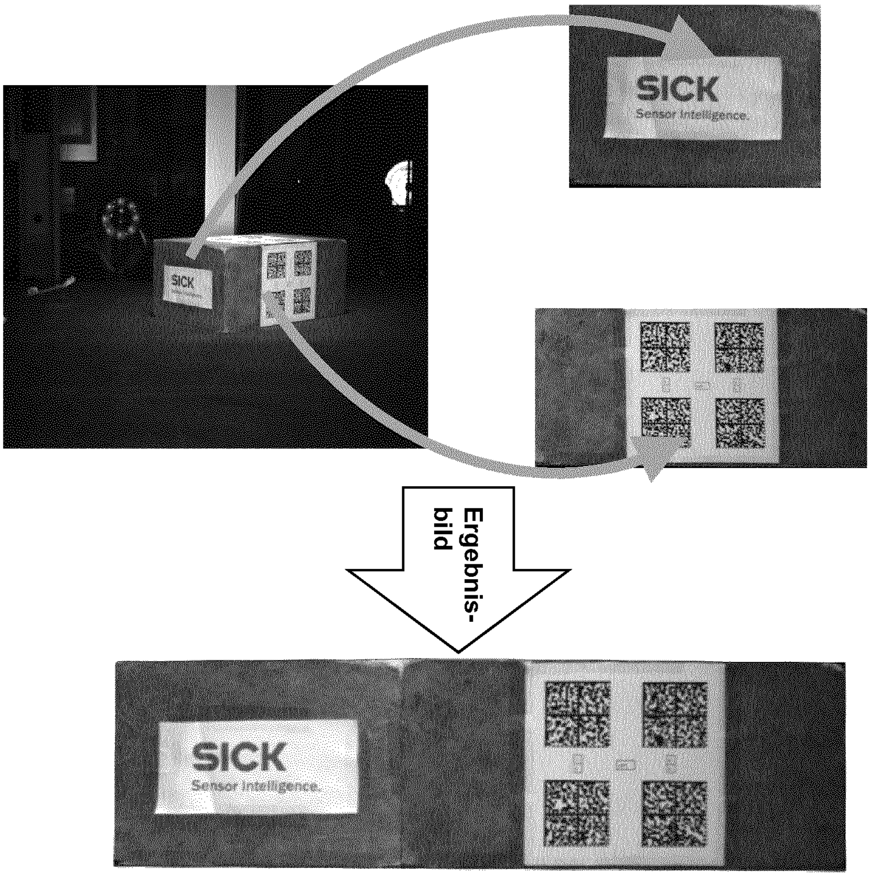


Figur 14

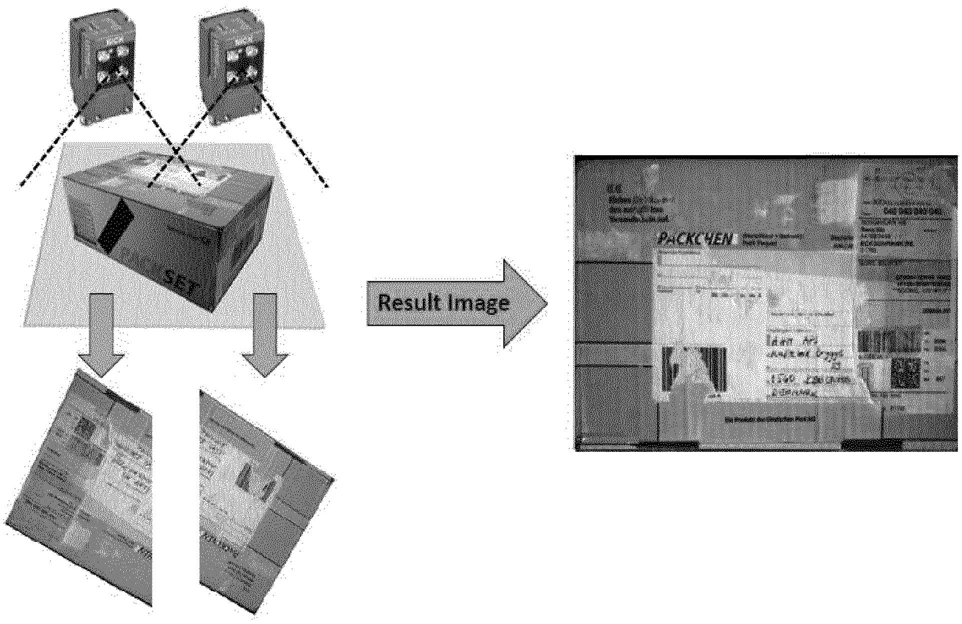

Figur 15

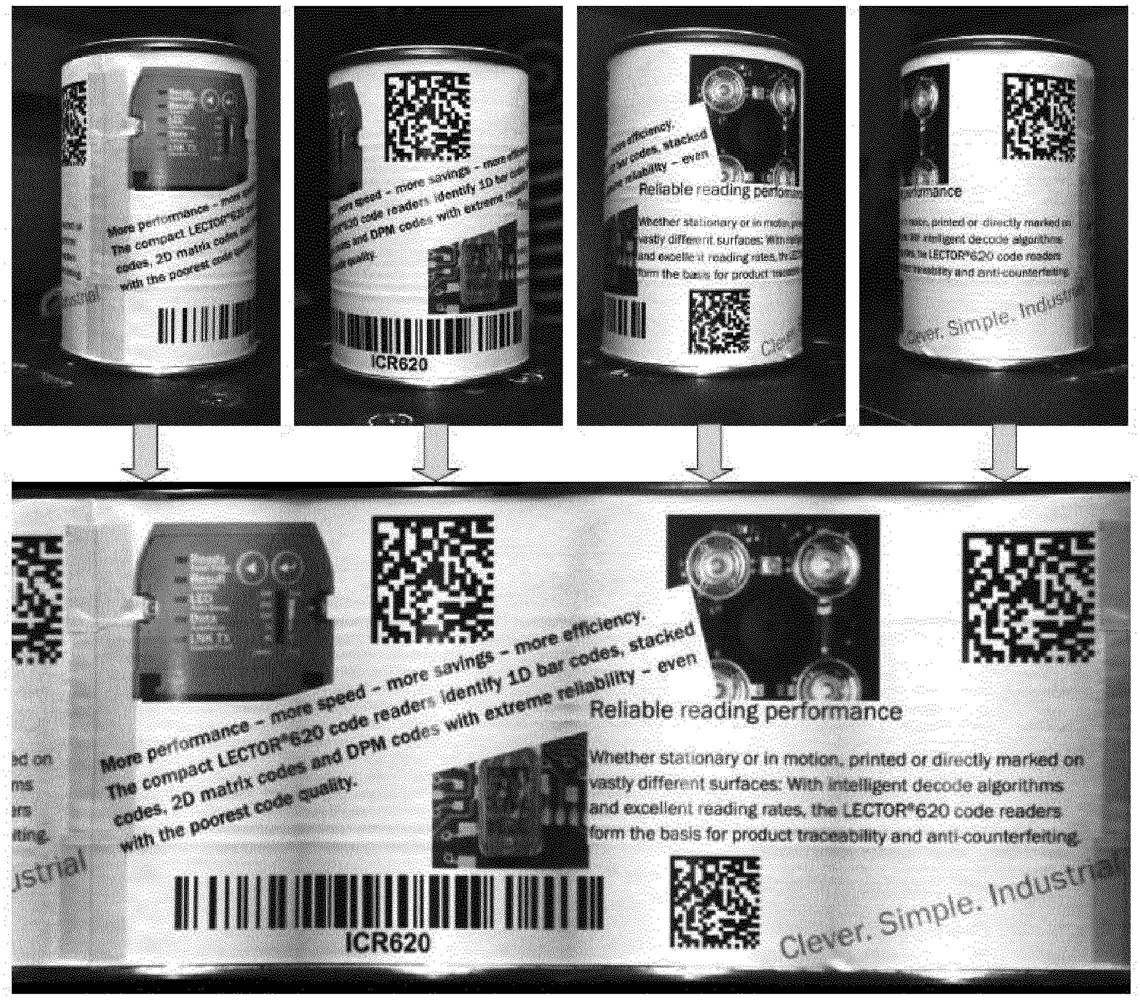
More performance – more speed – more savings – more efficiency.
The compact LECTOR®620 code readers identify 1D bar codes, stacked
codes, 2D matrix codes and DPM codes with extreme reliability – even
with the poorest code quality.
Reliable reading performance
Whether stationary or in motion, printed or directly marked on
vastly different surfaces: With intelligent decode algorithms
and excellent reading rates, the LECTOR®620 code readers
form the basis for product traceability and anti-counterfeiting.
ICR620
Clever. Simple. Industrial

Europäisches Patentamt
European Patent Office
Office européen des brevets

# EUROPÄISCHER RECHERCHENBERICHT

Nummer der Anmeldung
EP 13 19 8333

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | DE 10 2009 028743 A1 (BOSCH GMBH ROBERT [DE]) 17. März 2011 (2011-03-17)<br>* Zusammenfassung; Abbildungen 1-4 *<br>* Absätze [0006], [0007], [0038], [0046] * | 1-12,15<br>1-15 | INV.<br>G06T3/00<br>G06T5/00 |
| X<br>Y | US 2013/048722 A1 (DAVIS BRUCE L [US] ET AL) 28. Februar 2013 (2013-02-28)<br>* Zusammenfassung; Abbildungen 1,8 *<br>* Absätze [0003] - [0005], [0014], [0073], [0074] * | 1-11,13,15<br>1-15 | |
| X<br>Y | ZHANG:<br>IEEE TRANSACTIONS ON PATTERN ANALYSIS AND MACHINE INTELLIGENCE,<br>Bd. 22, Nr. 11, November 2000 (2000-11), Seite 1330, XP055037019,<br>ISSN: 0162-8828, DOI: 10.1109/34.888718<br>* Zusammenfassung; Abbildung 1 *<br>* Abschnitte 1, 2, 3.1, 3.2 * | 1-11,15<br>1-15 | |
| Y | EP 2 555 160 A1 (SICK AG [DE])<br>6. Februar 2013 (2013-02-06)<br>* Zusammenfassung; Abbildungen 1,2 *<br>* Absätze [0001] - [0005], [0009], [0012], [0015] * | 1-15 | RECHERCHIERTE SACHGEBIETE (IPC)<br>G06T<br>G06K |

-/--

Der vorliegende Recherchenbericht wurde für alle Patentansprüche erstellt

3

| Recherchenort | Abschlußdatum der Recherche | Prüfer |
|---|---|---|
| München | 9. Juli 2014 | Meinl, Wolfgang |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt
European Patent Office
Office européen des brevets

## EUROPÄISCHER RECHERCHENBERICHT

Nummer der Anmeldung
EP 13 19 8333

**EINSCHLÄGIGE DOKUMENTE**

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | ASARI V K ET AL: "A Pipelined Architecture for Real-Time Correction of Barrel Distortion in Wide-Angle Camera Images", IEEE TRANSACTIONS ON CIRCUITS AND SYSTEMS FOR VIDEO TECHNOLOGY, IEEE SERVICE CENTER, PISCATAWAY, NJ, US, Bd. 15, Nr. 3, März 2005 (2005-03), Seiten 436-444, XP011127220, ISSN: 1051-8215, DOI: 10.1109/TCSVT.2004.842609 | 13 | |
| A | * Zusammenfassung; Abbildungen 1,2 * * Seite 436 * | 1,15 | |
| | ----- | | |
| Y | US 2009/121027 A1 (NADABAR SATEESHA [US]) 14. Mai 2009 (2009-05-14) | 14 | |
| A | * Zusammenfassung; Abbildungen 4,8 * | 1,15 | |
| | ----- | | |
| | | | RECHERCHIERTE SACHGEBIETE (IPC) |

Der vorliegende Recherchenbericht wurde für alle Patentansprüche erstellt

3

| Recherchenort | Abschlußdatum der Recherche | Prüfer |
|---|---|---|
| München | 9. Juli 2014 | Meinl, Wolfgang |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 13 19 8333

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-07-2014

| Im Recherchenbericht angeführtes Patentdokument | Datum der Veröffentlichung | Mitglied(er) der Patentfamilie | Datum der Veröffentlichung |
|---|---|---|---|
| DE 102009028743 A1 | 17-03-2011 | CN 101996388 A | 30-03-2011 |
| | | DE 102009028743 A1 | 17-03-2011 |
| | | JP 2011045059 A | 03-03-2011 |
| | | US 2011044557 A1 | 24-02-2011 |
| US 2013048722 A1 | 28-02-2013 | KEINE | |
| EP 2555160 A1 | 06-02-2013 | EP 2555160 A1 | 06-02-2013 |
| | | US 2013033617 A1 | 07-02-2013 |
| US 2009121027 A1 | 14-05-2009 | EP 2210211 A1 | 28-07-2010 |
| | | JP 5414685 B2 | 12-02-2014 |
| | | JP 2011503748 A | 27-01-2011 |
| | | US 2009121027 A1 | 14-05-2009 |
| | | WO 2009064759 A1 | 22-05-2009 |

EPO FORM P0461

Für nähere Einzelheiten zu diesem Anhang : siehe Amtsblatt des Europäischen Patentamts, Nr.12/82